# EUROPÄISCHE PATENTSCHRIFT

(11) **EP 0 686 788 B1**
(45) Veröffentlichungstag und Bekanntmachung des Hinweises auf die Patenterteilung: **01.10.1997**
(21) Anmeldenummer: 95108088.6
(22) Anmeldetag: 26.05.1995
(51) Int. Cl.: F16H 57/02

(54) **Getriebe für einen Getriebemotor**
Transmission for geared motor
Transmission pour moto-réducteur

(30) Priorität: 10.06.1994 DE 4420305
(43) Veröffentlichungstag der Anmeldung: 13.12.1995
(73) Patentinhaber: CARL BOCKWOLDT GmbH & Co. KG GETRIEBEMOTORENWERK, D-23843 Bad Oldesloe (DE)
(72) Erfinder: Bremer, Karl-Friedrich, Dipl.-Ing., D-23623 Ahrensbök (DE)
(74) Vertreter: Beetz & Partner Patentanwälte

(56) Entgegenhaltungen:
- EP-A- 0 387 367
- CH-A- 154 897
- DE-B- 1 023 646
- GB-A- 1 250 167
- US-A- 2 910 882
- DESIGN ENGINEERING, Juni 1993 LONDON, Seite 18 XP 000382403 D.BROWN RADICON 'GEARED MOTOR UNITS GET IN LINE BY OFFERING A CHOICE'

## Beschreibung

Die Erfindung betrifft ein Getriebe für einen Getriebemotor, bestehend aus einer motorseitigen Antriebswelle, einer zu dieser achsparallelen Abtriebswelle, auf der ein Zahnrad aufgekeilt ist, einem Getriebegehäuse, in dessen innerer Querwand und in dessen endseitiger Stirnwand Ausnehmungen zur Halterung von Wellenlagern vorgesehen sind, einem im Inneren des Getriebegehäuses angeordneten Vorgelege und aus einem an der Endkante des Gehäusemantels unter Bildung einer abgedichteten Trennfuge befestigten Deckel, der eine Lageröffnung für die Antriebswelle aufweist.

Getriebemotoren sind kompakte Antriebsaggregate für eine Vielzahl von Anwendungsfällen. Sie bestehen aus einem Motor, der direkt an den Getriebedeckel angeflanscht ist und einem Getriebegehäuse mit den entsprechenden Verzahnungsteilen. Das Getriebe weist in der Regel eine erste Stufe aus einem Motorritzel und einem auf der Zwischenwelle angeordneten Zwischenrad sowie eine zweite Stufe aus einem Antriebsritzel und einem auf der Antriebswelle angeordnetes Antriebsrad auf.

Bei einer gattungsgemäßen Ausführung eines derartigen Getriebes sind die Antriebswelle und die Zwischenwelle jeweils in zwei Wälzlagern gelagert, die einerseits in der endseitigen Stirnwand des Getriebegehäuses und andererseits in einer Querwand im Getriebeinnenraum vorgesehen sind. Der Getriebedeckel schließt das Gehäuse zur Motorseite hin ab und fixiert über eine Zentrierung zwischen Motor und Deckel sowie eine Paßeinrichtung zwischen Deckel und Gehäuse die Lage vom Antriebsritzel zum Zwischenrad. Die Trennfuge zwischen Gehäuse und Deckel verläuft im rechten Winkel zu den Wellenachsen. Um das Antriebsrad auf der Antriebswelle zwischen den beiden Wälzlagern montieren zu können, muß das Getriebegehäuse entweder eine zusätzliche Montageöffnung aufweisen (siehe z.B. DE-B 10 23 646) oder über der Querwand und zwischen Querwand und Stirnwand muß ein ausreichender Freiraum vorhanden sein, um das Antriebsrad iin seine vorgesehene Position bringen zu können. Dieser zur Montage notwendige Freiraum führt zu vergrößerten äußeren Abmessungen des Getriebegehäuses.

Aufgabe der Erfindung ist es, ein Getriebe für einen gattungsgemäßen Getriebemotor zu schaffen, das bei vereinfachter Montage geringere Außenabmessungen ermöglicht.

Diese Aufgabe wird erfindungsgemäß dadurch gelöst, daß die Trennfuge zwischen dem Getriebegehäuse und dem Deckel im Bereich des auf der Abtriebswelle Laufgekeilten Zahnrads verläuft und in diesem Bereich zur Abtriebsseite des Getriebegehäuses hin versetzt ist.

Durch die erfindungsgemäßen Verlauf der Trennfuge wird im Bereich des Zahnrades, in der Regel oberhalb dieses Zahnrades, bei noch gelöstem Deckel ein Freiraum geschaffen, durch den das Zahnrad ohne oder mit nur geringfügiger Verkippung in seine vorgesehene Position zwischen der endseitigen Stirnwand des Getriebegehäuses und der Querwand eingeführt werden kann. Demzufolge kann die Höhe des Getriebes verkleinert werden. Da das Zahnrad im wesentlichen ohne Verkippung in seine vorgegebene Position eingebracht werden kann, verringert sich auch der Abstand zwischen der endseitigen Gehäusestirnwand und der Querwand, was eine Verkürzung des Gesamtgetriebes ergibt.

Aus herstellungstechnischen Gründen ist es zweckmäßig, wenn die Trennfuge zumindest teilweise unter einem spitzen Winkel schräg zur Getriebelängsachse verläuft. Die Trennfuge kann jedoch auch einen abgewinkelten oder bogenförmigen Verlauf in den Seitenwänden des Gehäuses haben, wodurch eine Selbstzentrierung zwischen dem Getriebegehäuse und dem Deckel erreicht wird.

Gemäß einer weiteren zweckmäßigen Ausgestaltung der Erfindung ist in dem Deckel eine Ausnehmung ausgebildet, in die das freie Ende der Zwischenwelle eingreift. Hierdurch wird eine paßgenaue Lage des Getriebedeckels mit dem Motorritzel zum Gehäuse mit dem Zwischenrad erzielt.

Das erfindungsgemäße Getriebe bietet die Vorteile einer kompaktesten Bauweise sowie einer hohen dynamischen Stabilität und Dichtheit aufgrund nur einer Trennfuge zwischem dem Getriebegehäuse und dem Deckel. Ferner können die Lagerbohrungen des Gehäuses in nur einer Aufspannung bearbeitet werden und die Zahnräder der Abtriebsstufe sind zweischnittig gelagert. Da die Fixierung des Deckels am Gehäuse durch das Ende der Vorgelegewelle erfolgt, sind keine weiteren Zentrierelemente erforderlich. Von besonderer praktischer Bedeutung ist noch der Vorzug der gegenüber bekannten artgleichen Getriebeausführungen wesentlich vereinfachten Montierbarkeit des Abtriebszahnrads.

Weitere Besonderheiten und Vorzüge der Erfindung ergeben sich aus der folgenden Beschreibung einer bevorzugten Getriebeausführung anhand der Zeichnung. Es zeigen:
Fig. 1 ein Getriebe für einen Getriebemotor im Axialschnitt;
Fig. 2 das Getriebe nach Fig. 1 in teilmontiertem Zustand.

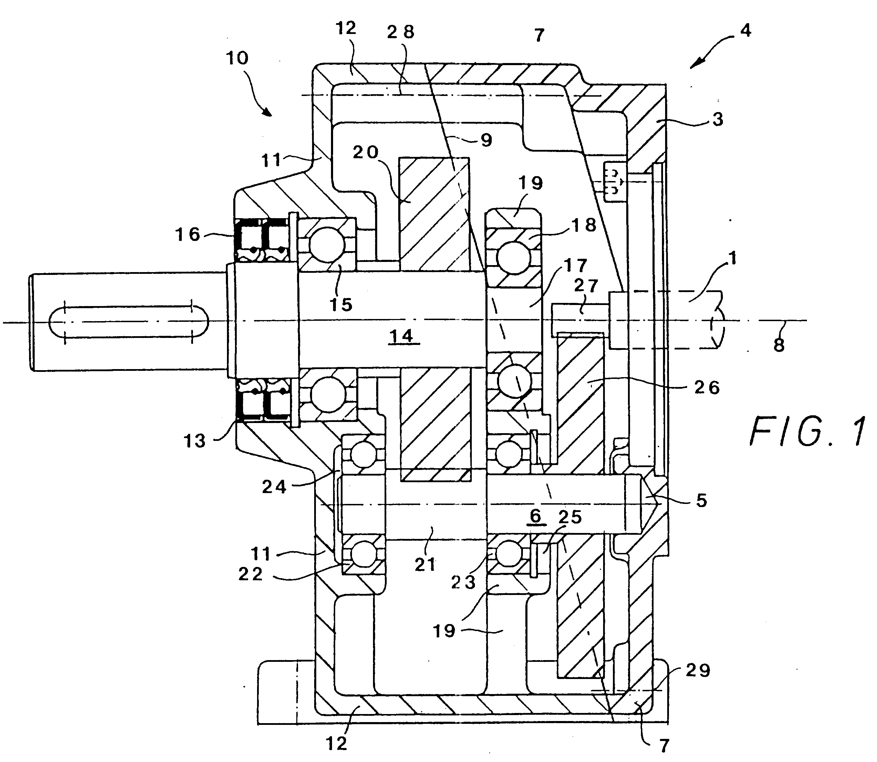

Das dargestellte Getriebe für einen Getriebemotor enthält eine Antriebs- bzw. Eingangswelle 1, die die Abtriebswelle des - nicht dargestellten - Motors oder eine mit dieser gekuppelten Zwischenwelle sein kann. Diese Welle 1 durchragt eine Ausnehmung 2, die in der eingangsseitigen Stirnwand 3 eines Deckels 4 ausgebildet ist. Unterhalb dieser Öffnung 2 ist in der Stirnwand 3 innenseitig eine Blindbohrung 5 ausgebildet, die zur Aufnahme des freien Endes einer Zwischenwelle 6 dient. An die Stirnwand 3 des einstückigen Deckels schließt eine Umfangswand 7 an, die längs einer in Fig. 1 unter einem spitzen Winkel α zur Getriebelängsachse geneigten Trennfuge 9 endet.

Ferner weist das dargestellte Getriebe ein Gehäuse 10 auf, das einstückig aus einer endseitigen Stirnwand 11 und einem daran angeformten Gehäusemantel 12 besteht. In einer Nabe 13 der Stirnwand 11 ist die Getriebe- Abtriebswelle 14 in einem Wälzlager 15 drehbar gelagert und nach außen durch Ringdichtungen 16 abgedichtet. Zur Erzielung einer sog. zweischnittigen Lagerung ist das Wellenende 17 in einem weiteren Wälzlager 18 gelagert, das in einer mit dem Gehäusemantel 12 einstückig verbundenen Querwand 19 angeordnet ist. Zwischen den beiden Wälzlagern 15 und 18 ist auf der Abtriebswelle 14 ein Antriebsrad 20 angeordnet. Dieses Zahnrad 20 kämmt mit dem Ritzel 21 der Zwischenwelle 6. Die Zwischenwelle 6 ist zu beiden Seiten dieses Zahnritzels 21 in zwei Wälzlagern 22, 23 zweischnittig gelagert, von denen ein Wälzlager 22 in einem Ausschnitt 24 in der Gehäusestirnwand 11 und das andere Wälzlager 23 in einer Ausnehmung 25 in der Querwand 19 fixiert sind. In Fig. 1 rechts neben dem Wälzlager 23 ist auf der Zwischenwelle 6 ein Zahnrad 26 befestigt, das mit dem Antriebsritzel 27 der Eingangswelle 1 kämmt.

Der Deckel 4 ist - wie in Fig. 1 gezeigt - unter Ausbildung der z.B. durch einen Kleber abgedichteten Trennfuge 9 an der Endkante des Gehäusemantels 12 durch Schrauben 28, 29 befestigt.

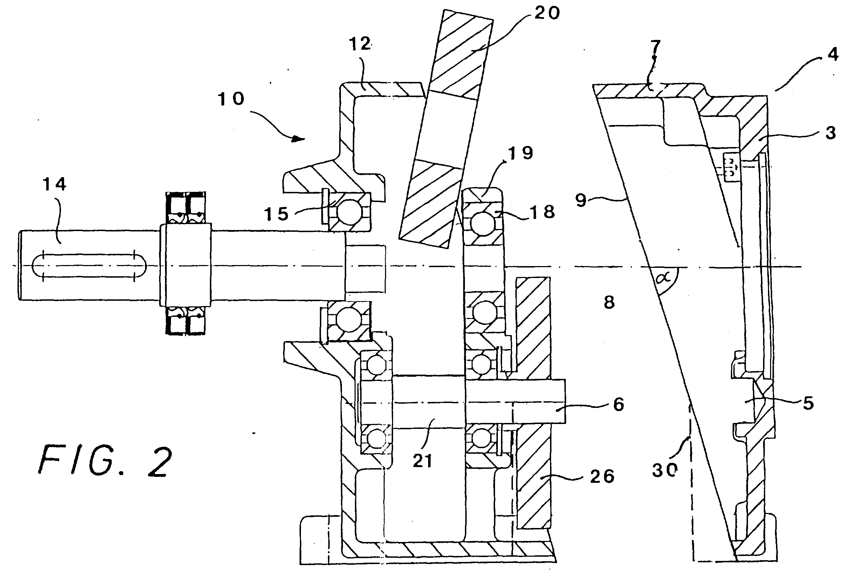

Die Vorzüge des erfindungsgemäßen Getriebes werden aus der Darstellung nach Fig. 2 ersichtlich, die den Montagezustand beim Einbau des Zahnrades 20 zeigt. Durch die Versetzung der Trennfuge 9 in Richtung der Abtriebsseite, d.h. durch deren Neigung um den Winkel α zur Getriebelängsachse 8 wird ein ausreichend großer Freiraum zwischen dem oberen Ende der Querwand 19 und dem Gehäusemantel 12 geschaffen, der eine nahezu vertikale Einführung des Zahnrades 20 in den Zwischenraum zwischen den beiden Wälzlagern 15 und 18 ermöglicht. In diesem Zustand ist die Abtriebswelle 14 in der dargestellten zurückgezogenen Position. Nach dem Einführen des Zahnrades 20 wird die Abtriebswelle 14 nach rechts bis in ihre Endstellung nach Fig. 1 geschoben. Anschließend wird der Deckel 4 an den Gehäusemantel 12 geschraubt.

Die Erfindung ist nicht auf das dargestellte Ausführungsbeispiel beschränkt. So kann beispielsweise die in der Zeichnung gradlinig in den Seitenwänden des Gehäusemantel verlaufende Trennfuge 9 einen abgewinkelten Verlauf haben, d.h. im unteren Teil - wie in Fig. 2 durch die gestrichelte Linie 30 gezeigt - quer zur Getriebslängsachse 8 oder auch unter einem anderen Neigungswinkel als dem Winkel α verlaufen. Ferner ist auch ein bogenförmiger, beispielsweise ein S-förmiger Verlauf der Trennfuge 9 möglich.

## Patentansprüche

1. Getriebe für einen Getriebemotor, bestehend aus einer motorseitigen Antriebswelle (1), einer zu dieser achsparallelen Abtriebswelle (14), auf der ein Zahnrad (20) angeordnet ist, einem Vorgelege (6, 21, 26), einem Getriebegehäuse (10), in dessen innerer Querwand (19) und in dessen endseitiger Stirnwand (11) Ausnehmungen zur Aufnahme von Wälzlagern ausgebildet sind, sowie aus einem an der Endkante des Gehäusemantels (12) unter Bildung einer abgedichteten Trennfuge (9) befestigten Deckel (4), der eine Durchgangsöffnung (2) für die Antriebswelle (1) aufweist,
dadurch gekennzeichnet,
daß die Trennfuge (9) im Bereich des auf der Abtriebswelle (14) aufgekeilten Zahnrades (20) verläuft und in diesem Bereich zur Abtriebsseite des Getriebegehäuses (10) hin versetzt ist.

2. Getriebe nach Anspruch 1, dadurch gekennzeichnet, daß die Trennfuge (9) zumindest teilweise unter einem spitzen Winkel α schräg zur Getriebelängsachse (8) verläuft.

3. Getriebe nach Anspruch 1 oder 2, dadurch gekennzeichnet, daß die Trennfuge (9, 30) einen abgewinkelten oder bogenförmigen Verlauf hat.

4. Getriebe nach einem der Ansprüche 1 bis 3, dadurch gekennzeichnet, daß im Deckel (3) eine Aufnahme (5) für das freie Ende der Vorgelegewelle (6) ausgebildet ist.

## Claims

1. Gear unit for a geared motor, comprising a motor-side drive shaft (1), an output shaft (14) which is axially parallel to the latter and on which a gearwheel (20) is arranged, a transmission (6, 21, 26), a gear-unit casing (10) in the inner transverse wall (19) and in the end-side front wall (11) of which recesses are formed for receiving rolling bearings, and a cover (4) which is fixed to the end edge of the casing shell (12) to form a sealed parting line (9) and has a through opening (2) for the drive shaft (1), characterised in that the parting line (9) runs in the region of the gearwheel (20), keyed to the output shaft (14), and in this region is offset towards the output end of the gear-unit casing (10).

2. Gear unit according to Claim 1, characterised in that the parting line (9), at least in part, runs obliquely at an acute angle a with respect to the longitudinal axis (8) of the gear unit.

3. Gear unit according to Claim 1 or 2, characterised in that the parting line (9, 30) has an angled or curved course.

4. Gear unit according to one of Claims 1 to 3, characterised in that a recess (5) is formed in the cover (3) [sic] for the free end of the countershaft (6).

## Revendications

1. Transmission pour moto-réducteur, comportant un arbre d'entrée situé du côté du moteur, un arbre de sortie (14) qui est parallèle à l'axe de ce dernier et sur lequel est montée une roue d'engrenage (20), une transmission intermédiaire (6, 21, 26), un carter de réducteur (10), dans la paroi transversale interne (19) duquel et dans la paroi frontale d'extrémité (11) duquel sont formés des logements pour y placer des roulements, ainsi qu'un couvercle (4) qui est fixé sur l'arête externe du corps du carter (12) en formant un joint de séparation (9) rendu étanche et présentant une ouverture de passage (2) pour l'arbre d'entrée (1),
caractérisée en ce que
le joint de séparation (9) s'étend dans la zone de la roue d'engrenage (20) clavetée sur l'arbre de sortie (14) et est décalée dans cette zone en direction du côté sortie du carter de réducteur (10).

2. Transmission selon la revendication 1, caractérisée en ce que le joint de séparation (9) s'étend au moins partiellement sous un angle aigu α incliné par rapport à l'axe longitudinal (8) de la transmission.

3. Transmission selon la revendication 1 ou 2, caractérisée en ce que le joint de séparation (9, 30) présente une forme anguleuse ou courbe.

4. Transmission selon l'une des revendications 1 à 3, caractérisée en ce qu'un logement (5) pour l'extrémité libre de l'arbre de transmission intermédiaire (6) est formé dans le couvercle (3).
